# EUROPÄISCHE PATENTANMELDUNG

(11) **EP 0 837 540 A1**
(43) Veröffentlichungstag der Anmeldung: **22.04.1998**
(21) Anmeldenummer: 97115155.0
(22) Anmeldetag: 02.09.1997
(51) Int. Cl.: H02K 5/04, H02K 11/04, H02K 5/22

(54) **Ventilator-Elektromotor mit umgestaltbarem Gehäuse**

(30) Priorität: 21.10.1996 DE 19643301
(71) Anmelder: MAICO ELEKTROAPPARATE-FABRIK GmbH, D-78056 Villingen-Schwenningen (DE)
(72) Erfinder: Krösche, Herbert, 78647 Trossingen (DE)
(74) Vertreter: Grosse, Rainer, Dipl.-Ing.

(57) **Zusammenfassung**

Die Erfindung betrifft einen Ventilator-Elektromotor mit einem Gehäuse, in dem der Stator und der Rotor des Elektromotors untergebracht sind und das die Lagereinrichtung für den Rotor aufnimmt, und mit einer Anschlußkammer für den elektrischen Anschluß von Versorgungsleitungen, wobei das Gehäuse (2) in ein Grundgehäuse (3) und ein abnehmbares Aufsatzgehäuse (4) unterteilt ist, der Stator (5) sich in dem Grundgehäuse (3) befindet und die Anschlußkammer (13) im Aufsatzgehäuse (4) ausgebildet ist und wobei zwischen dem Grundgehäuse (3) und dem Aufsatzgehäuse (4) ein, mindestens einen Aufnahmeraum (32) aufweisendes, axiales Verlängerungsgehäuse (31) entnehmbar angeordnet ist.

## Beschreibung

Die Erfindung betrifft einen Ventilator-Elektromotor mit einem Gehäuse, in dem der Stator und der Rotor des Elektromotors untergebracht sind und das die Lagereinrichtung für den Rotor aufnimmt, und mit einer Anschlußkammer für den elektrischen Anschluß von Versorgungsleitungen.

Ein Ventilator-Elektromotor der eingangs genannten Art ist bekannt. Er wird beispielsweise bei Dachventilatoren eingesetzt. Er weist ein den elektrischen Teil umschließendes Gehäuse auf, so daß Schutz vor der Umwelt gewährleistet ist. Es hat sich gezeigt, daß verschiedene Bauformen der Ventilatoren unterschiedliche Motoren benötigen, beispielsweise erfordert eine Ventilatoranordnung mit konstanter Lüfterraddrehzahl einen anderen Elektromotor als eine Lüftungseinrichtung mit Drehzahlregelung des Lüfterrads. Dies resultiert daraus, daß die drehzahlgeregelte Variante einen Frequenzumrichter benötigt, der dem Elektromotor in einem Zusatzgehäuse zugeordnet wird, so daß zwar die grundsätzliche Konstruktion des Elektromotors erhalten bleibt, jedoch entsprechende-Zusatzaggregate an ihm befestigt werden. Durch die zusätzlich angebrachten Teile wird die Motorperipherie -im Querschnitt gesehen- großflächiger, wodurch die vom Ventilator zu fördernde Luftströmung gestört wird, das heißt, eine derartige Anordnung besitzt einen größeren Strömungswiderstand, was nachteilig für den Wirkungsgrad der Gesamtanordnung ist.

Der Erfindung liegt daher die Aufgabe zugrunde, einen Ventilator-Elektromotor der eingangs genannten Art anzugeben, der -auch bei Bauformvariationen- einen optimalen lüftungstechnischen Einsatz gewährleistet.

Diese Aufgabe wird erfindungsgemäß dadurch gelöst, daß das Gehäuse in ein Grundgehäuse und ein abnehmbares Aufsatzgehäuse unterteilt ist, daß sich der Stator in dem Grundgehäuse befindet und die Anschlußkammer im Aufsatzgehäuse ausgebildet ist und daß zwischen dem Grundgehäuse und dem Aufsatzgehäuse ein, mindestens einen Aufnahmeraum aufweisendes, axiales Verlängerungsgehäuse entnehmbar anordbar ist. Hierdurch wird es möglich, das Gehäusevolumen des Elektromotors individuell zu gestalten, indem -bei dem Bedarf eines größeren Volumens- zwischen das Grundgehäuse und das Aufsatzgehäuse das sich in axialer Richtung erstreckende Verlängerungsgehäuse anordbar ist. "Axial" bedeutet in diesem Zusammenhang, in Richtung der Längserstreckung der Rotorwelle des Elektromotors blickend. Die erfindungsgemäße Besonderheit besteht darin, daß bei Verwendung des Verlängerungsgehäuses die Querschnittsfläche des Ventilator-Elektromotors im wesentlichen gleich groß bleibt oder sogar unverändert ist gegenüber der Variante ohne Verlängerungsgehäuse, so daß unabhängig von der gewählten Bauform nur eine geringfügige oder sogar keine Luftströmungsbeeinflussung stattfindet. Durch das Verlängerungsgehäuse wird ein zusätzlicher Aufnahmeraum oder eine Volumenvergrößerung bei dem Gehäuse des Elektromotors geschaffen, um zusätzliche Einrichtungen, beispielsweise Bauteile oder einen Frequenzumrichter und so weiter, aufzunehmen. Dadurch, daß im Falle des Frequenzumrichters dieser zwischen dem Aufsatzgehäuse und dem Grundgehäuse angeordnet ist, befindet er sich zwischen der Anschlußkammer für den Anschluß von Versorgungsleitungen, da die Anschlußkammer im Aufsatzgehäuse angeordnet ist und der Motorelektrik, nämlich der Stator- und der Rotorwicklung. Dies hat hinsichtlich der elektromagnetischen Verträglichkeit sehr große Vorteile, da Frequenzumrichter zum Abstrahlen von Störungen neigen. Die erläuterte Bauform ist sehr kompakt und daher störstrahlungsarm aufgebaut. Die Störstrahlungsarmut resultiert insbesondere auch daraus, daß sämtliche miteinander verbundenen Baugruppen von dem Gehäuse überfangen, also nach außen hin abgeschirmt sind. Gegenüber der zum Stand der Technik erläuterten Variante mit am eigentlichen Motorgehäuse befestigtem Zusatzgehäuse für die Anschlußkammer und einem weiteren Zusatzgehäuse für den Frequenzumrichter entfallen somit außerhalb der Motorperipherie zu verlegende Versorgungsleitungen, insbesondere zwischen Anschlußkasten und dem Frequenzumrichter sowie dem Frequenzumrichter und der Motorelektrik. Beim Gegenstand der Erfindung liegen diese Verbindungen im Gehäuse selbst und können daher überdies auch nicht die Luftströmung beeinflussen, wie dies jedoch im Stand der Technik der Fall ist.

Nach einer Weiterbildung der Erfindung ist vorgesehen, daß an dem Grundgehäuse das Aufsatzgehäuse mit Spannmitteln, gegebenenfalls unter Zwischenschalten und Fixieren des Verlängerungsgehäuses, festlegbar ist. Für die Umrüstung eines aus Grundgehäuse und Aufsatzgehäuse bestehenden Gehäuses ist daher nur erforderlich, die Spannmittel zu lösen, das Verlängerungsgehäuse zwischen Grundgehäuse und Aufsatzgehäuse anzuordnen und anschließend die Gesamtanordnung zu verspannen, so daß die einzelnen Gehäuseteile axial aneinander festgelegt werden. Aufgrund der einfachen Zwischenschaltmöglichkeit eines Verlängerungsgehäuses ist die Lagerhaltung der benötigten Teile sehr gering, da Grundgehäuse und Aufsatzgehäuse -unabhängig von der gewählten Bauformgleichbleibend einsetzbar sind. Wenn -gemäß Anspruch 1- davon gesprochen wird, daß zwischen Grundgehäuse und Aufsatzgehäuse ein Verlängerungsgehäuse entnehmbar anordbar ist, so bedeutet dies nicht eine Beschränkung auf nur ein einziges Verlängerungsgehäuse, da es auch im Umfang der Erfindung liegt, mehrere Verlängerungsgehäuse zwischen das Grundgehäuse und das Aufsatzgehäuse zu schalten, so daß -je nach Anzahl der zwischengeschalteten Verlängerungsgehäuse- eine mehr oder weniger umfangreiche Vergrößerung der axialen Baulänge des Gesamtgehäuses stattfindet. Damit ist das Gehäusevolumen individuell den jeweiligen Bedürfnissen anpaßbar. Beispielsweise kann in einem zwischengeschalteten Verlängerungsgehäuse ein Frequenzumrichter und in einem weiteren zwischengeschalteten Verlängerungsgehäuse eine Steuerungs- und Regelungselektronik untergebracht werden.

Ferner ist es vorteilhaft, wenn Grundgehäuse und Aufsatzgehäuse Ausrichtmittel beziehungsweise Gegenausrichtmittel für eine relative Positionsfixierung zueinander aufweisen und daß an einem Ende des Verlängerungsgehäuses ebenfalls die Ausrichtmittel und am anderen Ende des Verlängerungsgehäuses ebenfalls die Gegenausrichtmittel ausgebildet sind. Durch die Ausgestaltung von Ausrichtmitteln, die mit entsprechenden Gegenausrichtmitteln eines anzuflanschenden Teils zusammenwirken, läßt sich die Gesamtanordnung positionsgenau und vertauschungssicher zusammenbauen, wobei aufgrund der identisch ausgebildeten Ausrichtmittel und Gegenausrichtmittel am Verlängerungsgehäuse dessen jeweilige Mittel problemlos mit den entsprechenden Gegenmitteln der angrenzenden Gehäuseteile zusammenwirken können, ohne das besondere Verbindungsmittel oder Ausrichtmittel eingesetzt werden müssen. Diese Ausgestaltung ermöglicht es auch problemlos, mehrere als nur ein Verlängerungsgehäuse zwischen Grundgehäuse und Aufsatzgehäuse zu schalten, wobei die Ausrichtung zwischen beispielsweise zwei Verlängerungsgehäusen untereinander ebenfalls mit den entsprechenden Ausrichtmitteln und Gegenausrichtmitteln erfolgt.

Es ist vorteilhaft, wenn das Aufsatzgehäuse eine Lagerstelle für die Rotorlagerung aufweist. Da das Aufsatzgehäuse axial an dem Grundgehäuse angeordnet ist und demzufolge sich der Anschlußkasten im Stirnbereich des Elektromotors befindet, wobei vorzugsweise am gegenüberliegenden Stirnbereich der Wellenstutzen des Rotors angeordnet ist, wird erfindungsgemäß die eine Lagerstelle des Rotors nicht am Grundgehäuse, sondern -wie erwähnt- am Aufsatzgehäuse ausgebildet. Am Aufsatzgehäuse sind hierfür entsprechende Aufnahmemittel vorgesehen, in die das Lager eingesetzt wird. Diese Bauform hat den Vorteil, daß bei einer Zwischenschaltung eines Verlängerungsgehäuses die Lagerstelle durch Abnahme des Aufsatzgehäuses mit entfernt wird. Sofern das abgenommene Aufsatzgehäuse wiederverwendet wird, also zwischen Grundgehäuse und ein und demselben Aufsatzgehäuse ein Verlängerungsgehäuse geschaltet wird, so nimmt die Lageraufnahme am Aufsatzgehäuse eine andere axiale Lage ein mit der Folge, daß ein entsprechend verlängerter Rotor eingesetzt werden muß, der das Verlängerungsgehäuse durchgreift und dessen Wellenende in der Lagerstelle des Aufsatzgehäuses gelagert ist. Sofern beim Einsatz eines Verlängerungsgehäuses kein Rotortausch erfolgen soll, sondern der zuvor eingesetzte Rotor wieder einzusetzen ist, ist besonders bevorzugt vorgesehen, daß das Verlängerungsgehäuse ebenfalls die Lagerstelle für das Rotorlager aufweist, so daß beim Einbau des Verlängerungsgehäuses dort der bereits vorher verwendete Rotor gelagert werden kann. In einem solchen Fall ist es möglich, das mit Lagerstelle versehene Aufsatzgehäuse am Verlängerungsgehäuse zu befestigen, wobei diese Lagerstelle dann jedoch ungenutzt bleibt. Alternativ ist es auch möglich, ein Aufsatzgehäuse zu verwenden, das keine Lagerstelle aufweist, ansonsten jedoch vorzugsweise identisch zu dem mit Lagerstelle versehenen Aufsatzgehäuse ist.

Schließlich ist es vorteilhaft, wenn die Spannmittel Axial-Spannmittel, insbesondere Gewinde-Spannschrauben, sind. Wird eine Gehäuseverlängerung durch Einbau eines Verlängerungsgehäuses vorgenommen, so ist lediglich erforderlich, die als Gewinde-Spannschrauben ausgebildeten Spannmittel abzuschrauben, das Verlängerungsgehäuse einzusetzen und dann längere Gewinde-Spannschrauben einzusetzen, um das Gesamtgehäuse axial zu verspannen. Vorzugsweise sind mehrere derartige Gewinde-Spannschrauben insbesondere mit gleichmäßigem Winkelversatz über den Umfang des Elektromotor-Gehäuses verteilt angeordnet. Die Ausbildung der Spannmittel als Gewinde-Spannschrauben hat den Vorteil, daß es sich hierbei um einfache Massenartikel handelt, die preiswert sind.

Die Zeichnungen veranschaulichen die Erfindung anhand eines Ausführungsbeispiels und zwar zeigt:
- Figur 1: einen Ventilator-Elektromotor im Längsschnitt und
- Figur 2: den Ventilator-Elektromotor der Figur 1, jedoch unter Zwischenschaltung eines Verlängerungsgehäuses.

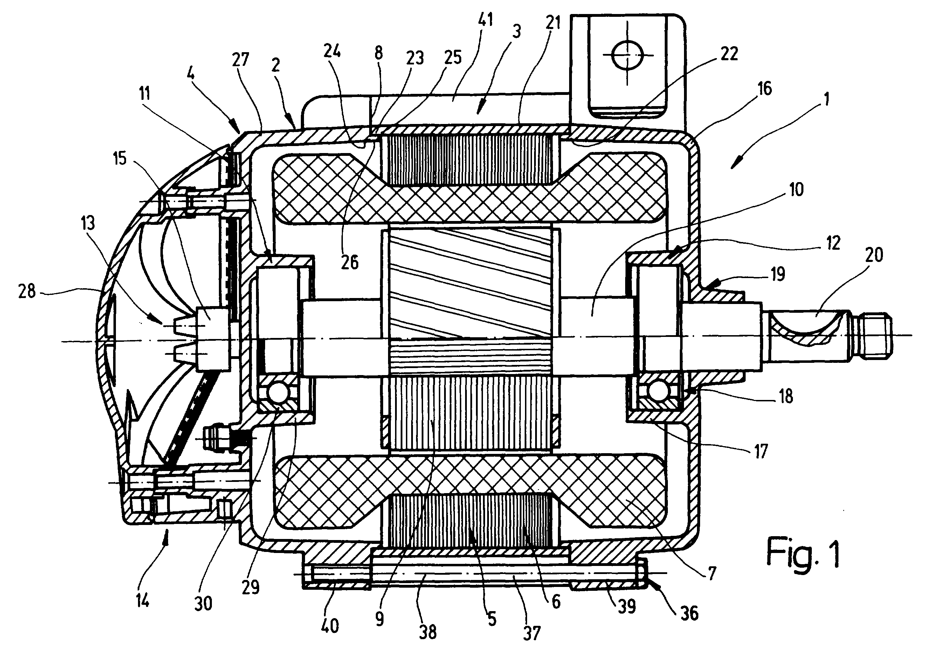

Die Figur 1 zeigt einen Ventilator-Elektromotor 1, der ein Gehäuse 2 aufweist. Das Gehäuse 2 setzt sich zusammen aus einem Grundgehäuse 3 und einem Aufsatzgehäuse 4. Im Grundgehäuse 3 ist der Stator 5 mit Blechpaket 6 und Statorwicklung 7 angeordnet (wobei jedoch ein Teil der Statorvicklung 7 das axiale Ende 8 des Grundgehäuses 3 überragt). Innerhalb des Grundgehäuses 3 ist der Rotor 9 des Ventilator-Elektromotors 1 angeordnet, der eine Rotorwelle 10 aufweist, deren einer Endbereich in einer ersten Lagerstelle 11 und deren anderer Endbereich in einer zweiten Lagerstelle 12 gelagert ist. Das Aufsatzgehäuse 4 weist eine Anschlußkammer 13 auf, die dem Anschluß von nicht dargestellten Versorgungsleitungen dient. Die Versorgungsleitungen durchsetzen in den Figuren nur angedeutete Durchführungen 14 ihre Anschlußdrähte werden auf Klemmenleisten 15 gelegt.

Das Grundgehäuse 3 besteht aus einem stirnseitigen Gehäuseteil 16, das einen inneren Axialkragen 17 besitzt, in dem ein Kugellager 18 der zweiten Lagerstelle 12 aufgenommen ist. Das stirnseitige Ende 19 des stirnseitigen Gehäuseteils 16 wird von dem Wellenstutzen 20 des Rotors 9 durchsetzt. An das stirnseitige Gehäuseteil 16 des Grundgehäuses 3 schließt sich ein mittleres Gehäuseteil 21 des Grundgehäuses an. Dies ist in eine axiale Ringstufe 22 des stirnseitigen Gehäuseteils 16 axial eingesetzt, wodurch es positioniert wird. Am mittleren Gehäuseteil 21 ist das Blechpaket 6 befestigt.

Das dem Wellenstutzen 20 abgewandte Ende des Grundgehäuses 3, nämlich das entsprechende Ende des mittleren Gehäuseteils 21, weist einen axialen Ringkragen 23 auf, der in eine Ringstufe 24 des Aufsatzgehäuses 4 eingreift. Mithin bildet der Ringkragen 23 Ausrichtmittel 25, der mit Gegenausrichtmittel 26, nämlich der erwähnten axialen Ringstufe 24, zusammenwirkt. Das Aufsatzgehäuse 4 besteht aus zwei Aufsatzgehäuseteilen, nämlich einem becherförmigen ersten Gehäuseteil 27 und einem im wesentlichen konvexen zweiten Gehäuseteil 28. Der Boden des becherförmigen ersten Gehäuseteils 27 schottet den den Stator 5 sowie den Rotor 9 aufnehmenden Gehäuseteil von dem zweiten Gehäuseteil 28 ab, wobei im zweiten Gehäuseteil 28 die Anschlußkammer 13 ausgebildet ist. Vom Boden des becherförmigen ersten Gehäuseteils 27 geht ein axialer Ringkragen 29 aus, der die erste Lagerstelle 11 bildet, das heißt, er nimmt ein Kugellager 30 für das zugehörige Ende der Rotorwelle 10 auf.

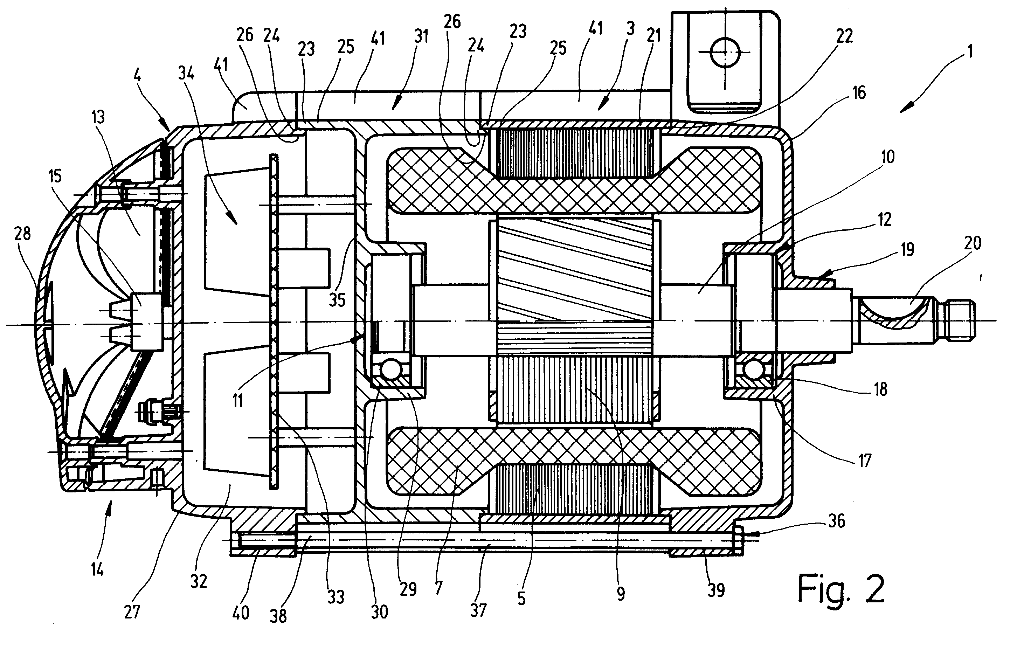

In der Figur 1 ist der Ventilator-Elektromotor 1 in seiner Grundvariante dargestellt. Soll das Volumen des Gehäuses 2 vergrößert werden, beispielsweise um einen Aufnahmeraum für einen Frequenzumrichter zu erhalten, so wird zwischen das Grundgehäuse 3 und das Aufsatzgehäuse 4 ein Verlängerungsgehäuse 31 geschaltet, das heißt, es wird als axiale Baueinheit in axialer Richtung zwischen die beiden genannten Gehäuseteile gesetzt. Dies geht aus der Figur 2 hervor. Es ist erkennbar, daß das Verlängerungsgehäuse 31 auf seiner einen Seite die Gegenausrichtmittel 26 bildende Ringstufe 24 aufweist und daß -in axialer Richtung- am anderen Ende des Verlängerungsgehäuses 31 der Ringkragen 23 ausgebildet ist, der das Ausrichtmittel 25 bildet. Die Ausrichtmittel 25 und Gegenausrichtmittel 26 entsprechen somit den bereits zu der Figur 1 genannten Ausrichtmitteln, so daß es auf einfache Weise möglich ist, eine Positionsfixierung des Verlängerungsgehäuses 31 zum Grundgehäuse 3 und auch zum Aufsatzgehäuse 4 zu schaffen. Durch den Einsatz des Verlängerungsgehäuses 31 ist ein zusätzlicher Aufnahmeraum 32 im Gesamtgehäuse geschaffen, in dem -gemäß Figur 2- eine Elektronikplatine 33 untergebracht ist, die Bauteile eines Frequenzumrichters 34 trägt. Mittels nicht dargestellter Versorgungsleitungen, die von der Anschlußkammer 13 kommen und die von dem Frequenzumrichter 34 zur elektrischen Einrichtung des Stators 5 zur Statorwicklung 7 führen, ist eine elektrische Verschaltung vorgenommen.

Der Figur 2 ist entnehmbar, daß das Verlängerungsgehäuse eine Mittelwand 35 aufweist, die eine axiale Trennung zwischen dem den Frequenzumrichter 34 aufweisenden Aufnahmeraum 32 und dem den Stator 5 beziehungsweise Rotor 9 aufnehmenden Bereich des Elektromotors 1 trennt. Auf der dem Wellenstutzen 20 zugekehrten Seite weist die Mittelwand 35 einen axialen Ringkragen 29 auf, der identisch zu dem bereits in Figur 1 erwähnten Ringkragen 29 ausgebildet ist und der Aufnahme des Kugellagers 30 dient. Mithin wird bei einem Übergang von der Ausführungsform der Figur 1 zu der Ausführungsform der Figur 2 ein und derselbe Rotor 9 mit gleicher Rotorwelle 10 verwendet. Das Aufsatzgehäuse 4 hat -bei einem Vergleich der Anordnung der Figuren 1 und 2- insoweit eine Änderung erfahren, als es keinen axialen-Ringkragen 29 aufweist, das heißt, wird eine Verlängerung des Gehäuses 2 mittels eines Verlängerungsgehäuses 31 vorgenommen, so ist beim Ausführungsbeispiel der Figur 2 ein Aufsatzgehäuse 4 eingesetzt, das geringfügige Änderungen gegenüber dem Aufsatzgehäuse 4 der Figur 1 besitzt. Es ist -nach einer Variante- jedoch auch möglich, daß ein und dasselbe Aufsatzgehäuse für die beiden Varianten der Figuren 1 und 2 verwendet wird, was lediglich zur Folge hat, daß aufgrund des axial vorstehenden Ringkragens 29 der Aufnahmeraum 32 verkleinert wird, da der Ringkragen 29 in diesen Bereich hineinragt.

Da die Querschnittskonturen von Grundgehäuse 3, Verlängerungsgehäuse 31 und Aufsatzgehäuse 4 einander entsprechen, wird bei einem Übergang der Ausgestaltung der Figur 1 zur Ausgestaltung der Figur 2 der Motorquerschnitt nicht beeinflußt, so daß in Axialrichtung strömender Luft, die von einem auf den Wellenstutzen 20 aufgesetzten Laufrad des Ventilators gefördert wird, kein zusätzlicher Strömungswiderstand entgegensteht, das heißt, die Gehäuse-Baulängenvariation übt auf die Luftströmung keinem negativen Einfluß aus.

Die einzelnen Gehäuseteile, nämlich Grundgehäuse 3, Verlängerungsgehäuse 31 und Aufsatzgehäuse 4 werden durch Spannmittel 36 miteinander verbunden. Die Spannmittel sind als Axial-Spannmittel 37 ausgebildet, nämlich insbesondere als Gewinde-Spannschrauben 38. Die Gewinde-Spannschrauben 38 sind gleichmäßig über den Umfang des Gehäuses 2 des Ventilator-Elektromotors 1 angeordnet. Vorzugsweise in einem Winkelversatz von 120°, so daß drei derartige

Gewinde-Spannschrauben 38 vorgesehen sind. Sie durchgreifen Aufnahmebohrungen 39 des Grundgehäuses 3 und sind in Gewindebohrungen 40 des Aufsatzgehäuses 4 eingeschraubt. Ferner können am Grundgehäuse 3, am Verlängerungsgehäuse 31 und am Aufsatzgehäuse 4 axiale Kühlrippen 41 vorgesehen sein, wobei jede Kühlrippe 41 durchgehend durch entsprechende Abschnitte der einzelnen Gehäuseteile ausgebildet werden.

## Patentansprüche

1. Ventilator-Elektromotor mit einem Gehäuse, in dem der Stator und der Rotor des Elektromotors untergebracht sind und das die Lagereinrichtung für den Rotor aufnimmt, und mit einer Anschlußkammer für den elektrischen Anschluß von Versorgungsleitungen, **dadurch gekennzeichnet**, daß das Gehäuse (2) in ein Grundgehäuse (3) und ein abnehmbares Aufsatzgehäuse (4) unterteilt ist, daß sich der Stator (5) in dem Grundgehäuse (3) befindet und die Anschlußkammer (13) im Aufsatzgehäuse (4) ausgebildet ist und daß zwischen dem Grundgehäuse (3) und dem Aufsatzgehäuse (4) ein, mindestens einen Aufnahmeraum (32) aufweisendes, axiales Verlängerungsgehäuse (31) entnehmbar angeordnet ist.

2. Ventilator-Elektromotor nach Anspruch 1, **dadurch gekennzeichnet**, daß an dem Grundgehäuse (3) das Aufsatzgehäuse (4) mit Spannmitteln (36), gegebenenfalls unter Zwischenschalten und Fixieren des Verlängerungsgehäuses (31), festlegbar ist.

3. Ventilator-Elektromotor nach einem der vorhergehenden Ansprüche, **dadurch gekennzeichnet**, daß Grundgehäuse (3) und Aufsatzgehäuse (4) Ausrichtmittel (25) beziehungsweise Gegenausrichtmittel (26) für eine relative Positionsfixierung zueinander aufweisen und daß an einem Ende des Verlängerungsgehäuses (31) ebenfalls die Ausrichtmittel (25) und am anderen Ende des Verlängerungsgehäuses (31) ebenfalls die Gegenausrichtmittel (26) ausgebildet sind.

4. Ventilator-Elektromotor nach einem der vorhergehenden Ansprüche, **dadurch gekennzeichnet**, daß das Aufsatzgehäuse (4) eine (erste) Lagerstelle (11) für die Rotorlagerung aufweist.

5. Ventilator-Elektromotor nach einem der vorhergehenden Ansprüche, **dadurch gekennzeichnet**, daß das Verlängerungsgehäuse (31) ebenfalls die erste Lagerstelle (11) aufweist.

6. Ventilator-Elektromotor nach einem der vorhergehenden Ansprüche, **dadurch gekennzeichnet**, daß das die erste Lagerstelle (11) aufweisende Aufsatzgehäuse (4) gegen ein lagerstellenfreies Aufsatzgehäuse (4) austauschbar abnehmbar ist.

7. Ventilator-Elektromotor nach einem der vorhergehenden Ansprüche, **dadurch gekennzeichnet**, daß die Spannmittel (36) Axial-Spannmittel (37), insbesondere Gewinde-Spannschrauben (38), sind.
